# EUROPÄISCHE PATENTANMELDUNG

(11) **EP 0 833 529 A2**
(43) Veröffentlichungstag der Anmeldung: **01.04.1998**
(21) Anmeldenummer: 97115752.4
(22) Anmeldetag: 10.09.1997
(51) Int. Cl.: H04Q 7/20, H04Q 7/24, H04B 7/26, H04Q 7/38

(54) **Verfahren zur Realisierung von ISDN-Verbindungen über eine Luftschnittstelle**

(30) Priorität: 30.09.1996 DE 19640447
(71) Anmelder: SIEMENS AKTIENGESELLSCHAFT, 80333 München (DE)
(72) Erfinder: Krumpe, Michael, Dipl.Ing., 82205 Gilching (DE); Lenhart, Johannes, Dipl.Ing., 82061 Neuried (DE)

(57) **Zusammenfassung**

Beim Aufbau einer ISDN-Verbindung über eine Luftschnittstelle (DECT) wird wenigstens eine zu der ISDN-Verbindung gehörende erste ISDN-Kanalinformation (D-Kanal) zwischen einer, einen ISDN-Anschluß aufweisenden, Empfangseinrichtung (RNT) und einer ersten Basisstation (RBS-A) übertragen. Wenigstens eine zu der ISDN-Verbindung gehörende zweite ISDN-Kanalinformation (B-Kanal) wird zwischen der Empfangseinrichtung (RNT) und einer zweiten Basisstation (RBS-B) übertragen.

## Beschreibung

Die Erfindung betrifft ein Verfahren zur Realisierung von ISDN-Verbindungen gemäß dem Oberbegriff des Patentanspruchs 1.

Insbesondere auf dem endgerätenahen Gebiet der Telekommunikation gewinnen Funkstrecken zunehmend an Bedeutung. Schnurlos-Telefone, Mobilfunkendgeräte und die drahtlose Anschlußtechnik RLL/WLL ("Radio in the Local Loop", "Wireless in the Local Loop") sind dafür bekannte Beispiele.

Mit der drahtlosen Anschlußtechnik RLL/WLL, die eine Einbindung einer Funkschnittstelle, z.B. einem System nach dem DECT-Standard (Digital Enhanced Cordless Telecommunication), vorsieht, sollen den Kommunikationsteilnehmern auch ISDN-Dienste an Standard-ISDN-Schnittstellen wie z.B. einem ISDN-Basisanschluß zur Verfügung gestellt werden, an den jeweils über Leitungen Kommunikationsendgeräte oder herkömmliche Kommunikationsanlagen anschließbar sind. Ein derartiges System ist z.B. aus der Produktschrift der Firma Siemens AG, "DECTlink Radio Access: Where Performance Counts", Dezember 95, Order Nr. A50001-N7-P1-1-7600 bekannt.

Ein solches RLL/WLL-System kann alternativ zu einem DECT-System auch mit einem GSM-System (Group Special Mobil bzw. Global System for Mobile Communication) ausgebildet sein. Darüber hinaus kommen als weitere Möglichkeiten für die Realisierung eines RLL/WLL-Systems auch zukünftige Luftschnittstellen-Systeme in Frage, die auf den bekannten Vielfachzugriffsmethoden FDMA, TDMA, CDMA (Frequency Division Multiple Access, Time Division Multiple Access, Code Division Multiple Access) und hieraus gebildeten hybriden Vielfachzugriffsmethoden basieren.

Unter Einbindung einer hochleistungsfähigen Luftschnittstelle, wie z.B. dem DECT-System mit maximal 10 Frequenzen zu je 12 Kanälen, sind dabei simultane Funkverbindung zwischen einer Mehrzahl von der Netzbetreiberseite zugehörigen sogenannten Basisstationen (Radio Base Stations) und einer Mehrzahl von der Kommunikationsteilnehmerseite zugehörigen sogenannten Funknetzabschlußeinrichtungen (Radio Network Termination) möglich.

Bezüglich ISDN-Verbindungen ist vorgesehen, daß die zu einer jeweiligen ISDN-Verbindung gehörenden Kanalinformationen (bei einem ISDN-Basisanschluß, der auch als ISDN-S0-Schnittstelle bekannt ist, sind dies zwei als B bezeichnete Datenkanäle und ein als D bezeichneter Signalisierungskanal) gemeinsam zwischen einer ausgewählten Basisstation und einer Funknetzabschlußeinrichtung übertragen werden.

Für den Fall, daß die gewählte Basisstation nicht über ausreichende Ressourcen zum Aufbau der ISDN-Verbindung verfügt, muß von der Funknetzabschlußeinrichtung eine andere Basisstation gefunden werden, die über alle für den kompletten Aufbau der ISDN-Verbindung - also für alle ISDN-Kanalinformationen - nötigen Ressourcen verfügt. Wird keine Basisstation ermittelt, die diese Bedingung erfüllt, kann die ISDN-Verbindung nicht aufgebaut werden.

Aufgabe der vorliegenden Erfindung ist es ausgehend von den Merkmalen des Oberbegriffs des Patentanspruchs 1 die Bedingungen für ein Zustandekommen einer ISDN-Verbindung zu verbessern.

Gelöst wird diese Aufgabe erfindungsgemäß durch die kennzeichnenden Merkmale des Patentanspruchs 1.

Ein wesentlicher Vorteil des Verfahrens ist neben der Erzielung einer größeren Verfügbarkeit von ISDN-Verbindungen darin zu sehen, daß die Wartezeit für einen Aufbau einer ISDN-Verbindung im Durchschnitt erheblich verringert wird, da eine, mit einem ISDN-Kanalinformation bereits aufgebaute Verbindung zu einer Basisstation nicht wieder abgebaut und mit einer anderen Basisstation wieder neu aufgebaut werden muß, wenn bei der erstgenannten Basisstation keine Ressourcen für den Aufbau weiterer Verbindungen für die anderen ISDN-Kanalinformationen der betreffenden ISDN-Verbindung vorhanden sind.

Vorteilhafte Weiterbildungen der Erfindung sind in den Unteransprüchen angegeben.

Ein Ausführungsbeispiel der Erfindung wird im folgenden anhand der Zeichnung näher erläutert, wobei insbesondere noch weitere, durch die Erfindung erzielbare Vorteile dargelegt werden.

Dabei zeigen
- FIG 1: eine Architektur eines Telekommunikationssystems unter Einbindung eines RLL-Teilsystems
- FIG 2: ein Blockschaltbild zur Veranschaulichung der wesentlichen Elemente eines RLL-Teilsystems nach FIG 1

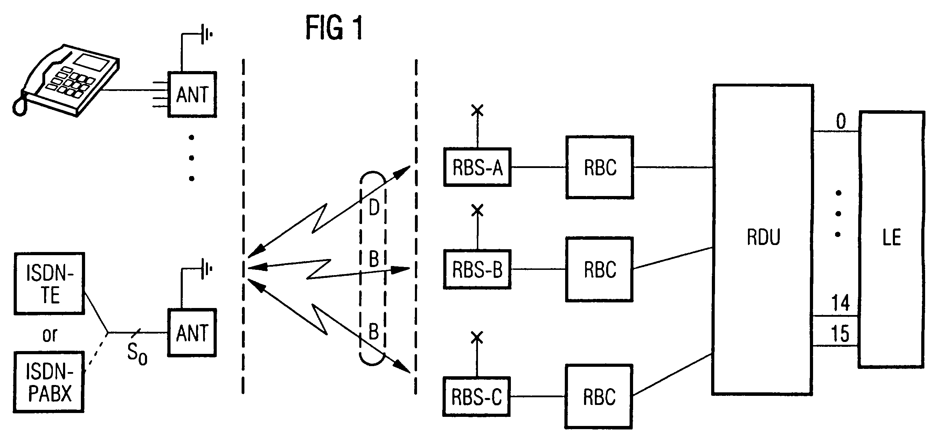

In FIG 1 ist die Architektur eines aus der eingangs genannten Produktschrift der Firma Siemens AG "DECTlink Radio Access" bekannten Telekommunikationssystems dargestellt. Im einzelnen zeigt diese Architektur von rechts nach links eine örtliche Vermittlungseinrichtung LE, z.B. eine ISDN-Vermittlungseinrichtung eines Netzbetreibers. An diese ist drahtgebunden, z.B. über eine V5.1- oder V5.2-Schnittstelle eine Funkverteileinrichtung RDU (Radio Distribution Unit) angeschlossen. Von dieser bestehen auch als "Transmission Link" bezeichnete Verbindungen zu drei Funkbasisstationskontrolleinrichtungen RBC (Radio Base Station Controller). Diese Verbindungen können mit optischen Kabeln, drahtgebunden oder durch Funk realisiert sein.

An die Funkbasisstationskontrolleinrichtungen RBC sind jeweils eine Funkbasisstation RBS-A,...,RBS-C (Radio Base Station) drahtgebunden, z.B. bis zu einer Entfernung von 5 km, angeschlossen. Von den Funkbasisstationen RBS-A,...,RBS-C ist eine Funkübertragung zu Funknetzabschlußeinrichtungen RNT (Radio Network Termination) vorgesehen. Die Funkübertragung kann zwischen den Funkbasisstationen RBS-A,...,RBS-C und den Funknetzabschlußeinrichtungen RNT unmittelbar oder ggf. über Funkrelaisstationen (Radio Network Repeater) (nicht dargestellt) erfolgen. An die Funknetzabschlußeinrichtungen RNT sind Telekommunikationsendgeräte wie herkömmliche Telefone, ISDN-Telekommunikationsendgeräte ISDN-TE oder ISDN-Nebenstellenanlagen ISDN-PABX angeschlossen.

Die Funknetzabschlußeinrichtung RNT stellt zum Anschluß von ISDN-Engeräten bzw. Nebenstellenanlagen einen ISDN-S0-Anschluß - zwei Nutzdatenkanäle mit je 64Kbit/sec und ein Signalisierungskanal mit 16Kbit/sec d.h. 2B+D-Kanäle - zur Verfügung. Der ISDN-S0-Anschluß, der auch als ISDN-Basisanschluß bezeichnet wird, betrifft den Standardfall, auf den im weiteren eingegangen wird. Es ist u.a. jedoch auch eine Realisierung eines ISDN-Anschlusses mit einem Signalisierungskanal und nur einem Nutzdatenkanal oder eines sogenannten ISDN-Primär-Multiplex-Anschlusses - auch S2M-Anschluß genannt - mit 30 Nutzkanälen und einem D-Kanal zu je 64 Kbit/sec möglich.

In der Figur ist die für vorliegende Erfindung im besonderen relevante Situation symbolisch dargestellt, bei der im Zuge einer ISDN-Verbindung deren ISDN-Kanäle D,B,B über wenigstens zwei unterschiedliche Funkbasisstationen RBS-A,...,RBS-C an eine Funknetzabschlußeinrichtung RNT übertragen werden.

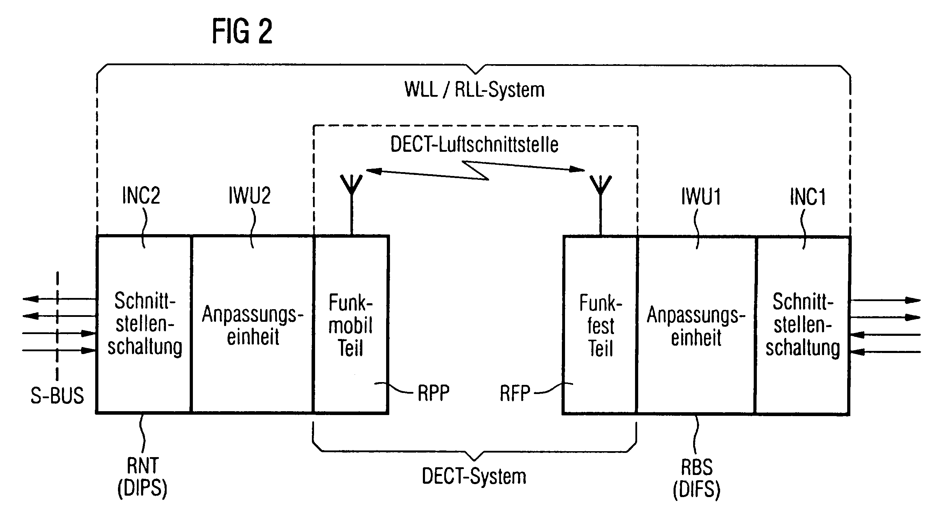

In FIG 2 sind in Form eines Blockschaltbildes die wesentlichen Elemente eines RLL/WLL-Systems (Radio in the Local Loop/Wireless in the Local Loop)dargestellt. Dieses System besteht im wesentlichen aus zwei Telekommunikations-Schnittstellenmodulen, einem ersten Telekommunikations-Schnittstellenmodul DIFS (DECT Intermediate Fixed System) und einem zweiten Telekommunikations-Schnittstellenmodul DIPS (DECT Intermediate Portable System), die drahtlos z. B. über eine DECT-Luftschnittstelle miteinander verbunden sind. Das erste Telekommunikations-Schnittstellenmodul DIFS ist in der in FIG 1 dargestellten Architektur als Funkbasisstation RBS bezeichnet und das zweite Telekommunikations-Schnittstellenmodul DIPS ist als Funknetzabschlußeinrichtung RNT bezeichnet.

Das erste Telekommunikations-Schnittstellenmodul DIFS enthält ein Funk-Fest-Teil RFP (Radio Fixed Part), eine Anpassungseinheit IWU1 (Interworking Unit) und eine Schnittstellenschaltung INC1 (Interface Circuitry) zur Bildung einer Schnittstelle in Richtung zum Netzbetreiber z.B. zur ISDN-Vermittlungseinrichtung des Netzbetreibers. Die Schnittstelle kann z.B. eine ISDN-S0-Schnittstelle oder U-Schnittstelle sein.

Das zweite Telekommunikations-Schnittstellenmodul DIPS enthält ein Funk-Mobil-Teil RPP (Radio Portable Part), eine Anpassungseinheit IWU2 (Interworking Unit) und eine Schnittstellenschaltung INC2 (Interface Circuitry) zur Bildung einer ISDN-S0-Schnittstelle, d.h. zur Bildung eines ISDN-S0-Anschlusses. Der Funk-Fest-Teil RFP und das Funk-Mobil-Teil RPP bilden dabei das bekannte DECT-System.

Ein DECT-(bzw. GAP)-System ist i.ü. ein bezüglich der Vielfachzugriffsverfahren hybrides System, bei dem nach dem FDMA-Prinzip (Frequency Division Multiple Access) auf 10 Frequenzen im Frequenzband zwischen 1,88 und 1,90 GHz Funknachrichten nach dem TDMA-Prinzip in einer durch Multizeitrahmen, Zeitrahmen und Zeitschlitze vorgegebenen zeitlichen Abfolge von einer Funkbasisstation RFP zu einem Funk-Mobil-Teil RPP und von einem Funk-Mobil-Teil RPP zu einer Funkbasisstation RFP (Duplex-Betrieb) gesendet werden kann.

Zur Erläuterung eines Beispiels für eine Implementierung der Erfindung in einem RLL-System wird im folgenden kurz auf den bekannten, gemäß 'DECT-Intermediate-Standard' ablaufenden Verbindungsaufbau und dessen Probleme bei der Erstellung einer ISDN-Verbindung für einen ISDN-(Basis)Anschluß eingegangen.

Im Zuge des Verbindungsaufbaus für die ISDN-Kanalinformationen (D+2B) eines ISDN-Basisanschlusses wird gemäß 'DECT-Intermediate-Standard' zuerst für die ISDN-Signalisierungsinformation d.h. für die ISDN-D-Kanalinformation ein freier Kanal (C-plane channel) des DECT-Systems gesucht und für eine Verbindung zwischen der betreffenden Funknetzabschlußeinrichtung RNT und einer von dieser gewählten Basisstation RBS-A eingerichtet. Danach wird gemäß 'DECT-Intermediate-Standard' ein erster weiterer DECT-Kanal (U-plane channel) für die Übermittlung einer ersten, Nutzdaten (ISDN-B-Kanal) betreffenden, ISDN-(B)Kanalinformation angefordert.

Obzwar auf der gesamten DECT-Luftschnittstelle insgesamt 120 Kanäle verfügbar sind, kann der Fall eintreten, daß mit der gewählten Basisstation RBS-A - mit der bereits die ISDN-D-Kanalverbindung aufgebaut ist - kein Aufbau einer ISDN-B-Kanalverbindung möglich ist. So können z.B. schon alle ISDN-B-Kanäle an der Basisstation RBS-A belegt sein. Die Basisstation RBS-A würde dann das DECT-Meldungs-Bit 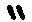 RFP busy 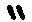 aussenden.

Ebenso kann vorkommen, daß auf der terrestrischen Strecke zwischen der gewählten Basisstation RBS-A und dem weiteren ISDN-Netzwerk nicht ausreichend Kanäle verfügbar sind, wodurch wiederum ein Aufbau der ISDN-B-Kanalverbindung blockiert wird.

Andererseits kann aber auch auf der Strecke zwischen der Basisstation RBS-A und dem ISDN-Netzwerk noch ein Kanal verfügbar sein, dieser aber den Anforderungen des ISDN-Teilnehmers (d.h. dem 'Bearer-Service' des ISDN-Teilnehmers) nicht entsprechen. Z.B. ist das der Fall, wenn ein sogenannter 'Double slot'-Zeitschlitz zur Datenübertragung benötigt wird, der zwar auf der Luftschnittstelle verfügbar wäre, auf der Strecke zwischen der Basisstation RBS-A und dem ISDN-Netzwerk aber nur noch ein sogenannter 'Full slot'-Zeitschlitz verfügbar ist. Die Aussendung des DECT-Meldungs-Bit "RFP busy" ist in diesem Fall nicht zu erwarten, da ja grundsätzlich noch ein freier Kanal belegt werden kann.

In letzterem Falle (d.h. das DECT-Meldungs-Bit "RFP busy" wird nicht ausgesendet) wird - wie insbesondere in ETS 300 175-3; 10.5 beschrieben - zum Aufbau eines weiteren Funkkanals auf der DECT-Luftschnittstelle für die Übertragung der ISDN-B-Kanalinformation eine "Bearer request"-Meldung von der Funknetzabschlußeinrichtung RNT zur Basisstation RBS-A gesendet. Da der geforderte Kanal aber auf der terrestrischen Seite d.h. zwischen der Basisstation RBS-A und dem ISDN-Netzwerk nicht weitergeleitet werden kann, wird - gemäß dem Stand der Technik - die Basisstation RBS-A keine Quittung senden und die Funknetzabschlußeinrichtung RNT wird nach einiger Zeit erneut eine "Bearer request"-Meldung zwar auf einem anderen Funkkanal, jedoch wieder zur gleichen Basisstation RBS-A senden. Es wird aus den gleichen Gründen wieder keine Quittung empfangen werden und es verstreicht Zeit für den Belegungsaufbau. Erst wenn ein Überwachungszeitglied für den Verbindungsabbau abläuft, wird vom sogenannten 'MAC-Layer' der Versuch der Kanalbelegung abgebrochen. Ein Verbindungsaufbau für die ISDN-B-Kanalinformationen (U-plane channel) kommt nicht zustande.

Im Rahmen einer Implementierung des erfindungsgemäßen Verfahren kann jetzt vorgesehen werden, daß von der Funknetzabschlußeinrichtung RNT die "Bearer request"-Meldung für die Belegung der ISDN-B-Kanäle (U-plane) sofort an eine andere Basisstation RBS übermittelt wird, wenn alle (terrestrischen) Kanäle zwischen der für den ISDN-D-Kanal gewählten Basisstation RBS-A und dem ISDN-Netzwerk belegt sind (d.h. das DECT-Meldungs-Bit "RFP busy" wird ausgesendet), oder der geforderte 'Bearer service' auf der terrestrischen Seite nicht verfügbar ist.

Wenn die Basisstation RBS-A ein DECT-Meldungs-Bit "RFP busy" aussendet, ist der Belegtzustand der Basisstation RBS-A für die Funknetzabschlußeinrichtung RNT sofort erkennbar, und es kann sofort eine andere Basisstation RBS-B ausgewählt werden.

Wenn aber nur der geforderte "Bearer service" nicht verfügbar ist, muß dies der Funknetzabschlußeinrichtung RNT gemeldet werden. Dazu wird die Basisstation RBS-A die DECT-Meldung "Bearer request" der Funknetzabschlußeinrichtung RNT mit einer Informationsmeldung, z.B. in Form einer Zurückweisung quittieren, wonach der geforderte "Bearer service" über diese Basisstation RBS-A nicht möglich ist.

Eine solche Zurückweisung der von der Funknetzabschlußeinrichtung RNT gesendeten Meldung "Bearer request" kann von der Basisstation RBS-A mit einer MAC-Layer-Meldung 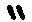 Release" (siehe insbesondere ETS 300 175-3; 7.2.5.3.13) mit dem Freigabegrund (release reason) "Base station busy 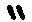 erfolgen (zur DECT-"Release Prozedur" siehe insbesondere ETS 300 175-3; 10.7.2.3).

Wenn also die Funknetzabschlußeinrichtung RNT auf die von ihr gesendete Meldung "Bearer request 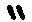 sofort die Meldung "Release" von der Basisstation RBS-A empfängt, wird die nächste "Bearer request" Meldung an eine andere Basisstation RBS-B übermittelt.

Die Möglichkeit unter Aufrechterhaltung der bereits aufgebauten ISDN-Kanalverbindung nach einer anderen Basisstation RBS-B suchen zu können und zu dieser eine weitere ISDN-Kanalverbindung aufzubauen, führt dazu, daß bei erfolgreichem Aufbau der ISDN-Verbindung die ISDN-D-Kanalinformation und die ISDN-B-Kanalinformationen über unterschiedliche Wege transportiert werden. Die Zusammenführung bzw. die Trennung der über unterschiedliche Basisstation RBS-A, RBS-B geführten ISDN-Kanalinformationen erfolgt in der Funkverteileinrichtung RDU.

## Patentansprüche

1. Verfahren zur Realisierung von ISDN-Verbindungen zwischen einem ISDN-Netzwerk und Teilnehmerendgeräten unter Zwischenschaltung einer Luftschnittstelle (DECT), die eine drahtlose Übertragung von ISDN-Kanalinformationen (D,B,B) zwischen an das ISDN-Netzwerk angeschlossene Feststationen (RBS) und über einen ISDN-Anschluß an Teilnehmerendgeräte angeschlossenen Empfangseinrichtungen (RNT) vorsieht,
**dadurch gekennzeichnet,**
daß für eine ISDN-Verbindung wenigstens eine zu dieser gehörende erste ISDN-Kanalinformation (D) zwischen der Empfangseinrichtung (RNT) und einer ersten Feststation (RBS-A) und wenigstens eine zu der ISDN-Verbindung gehörende zweite ISDN-Kanalinformation (B) zwischen der Empfangseinrichtung (RNT) und einer zweiten Feststation (RBS-B) übertragen werden.

2. Verfahren nach Anspruch 1,
**dadurch gekennzeichnet,**
daß die Luftschnittstelle eine nach dem DECT-Standard gestaltete Funkschnittstelle ist und daß die Feststationen jeweils Teil einer Basisstation (RBS) und die Empfangseinrichtungen jeweils Teil einer Funknetzabschlußeinrichtung (RNT) eines in ein ISDN-Netzwerk eingebundenen RLL/WLL-Systems sind.

3. Verfahren nach Anspruch 2,
**dadurch gekennzeichnet,**
daß bei einem Aufbau einer wenigstens zwei ISDN-Kanalinformationen (D,B,B) beinhaltenden ISDN-Verbindung von einer Funknetzabschlußeinrichtung (RNT) zunächst eine erste Basisstation (RBS-A) für eine Übertragung einer ersten ISDN-Kanalinformation (D) angefordert wird,
daß die erste Basisstation (RBS-A) zur Übertragung einer zweiten ISDN-Kanalinformation (B) angefordert wird und daß nach Erhalt einer Abweisungsmeldung eine zweite Basisstation (RBS-B) zur Übertragung der zweiten Kanalinformation (B) angefordert wird.
